# DEMANDE DE BREVET EUROPEEN

(11) **EP 0 539 321 A1**
(43) Date de publication de la demande: **28.04.1993**
(21) Numéro de dépôt: 92810741.6
(22) Date de dépôt: 02.10.1992
(51) Int. Cl.: G01B 7/34, G01N 27/00

(54) **Détecteur interférométrique de résolution atomique, utilisations et procédés de mise en oeuvre**

(30) Priorité: 15.10.1991 CH 3021/91
(71) Demandeur: CENTRE SUISSE D'ELECTRONIQUE ET DE MICROTECHNIQUE S.A., CH-2007 Neuchâtel (CH)
(72) Inventeur: Christoph, Rainer F., CH-2034 Peseux (CH); Kotrotsios, Georges, CH-1005 Lausanne (CH)
(74) Mandataire: Brulliard, Joel

(57) **Abrégé**

La présente invention concerne un microscope interférométrique de forces atomiques pour la mesure de la rugosité ou des irrégularités de surfaces. Le détecteur interférométrique de résolution atomique (1) du microscope interférométrique, faisant plus particulièrement l'objet de l'invention, comprend une fibre optique (2) et un levier (9) comportant une couche métallique (13, 14), respectivement semi-réfléchissante et réfléchissante, de manière à constituer un interféromètre du type Fabry-Perot. Les couches métalliques (13, 14) sont soumises à une différence de potentiel ΔV (15) de manière à fixer le point de fonctionnement P dudit interféromètre du type Fabry-Perot pour lequel la sensibilité est maximale, par l'application d'une force électrostatique audit levier. L'invention concerne également une utilisation du microscope interférométrique de forces atomiques pour la détermination de la rugosité ou des irrégularités d'une surface (7) disposée dans un bain électrolytique ainsi que les procédés de mise en oeuvre du microscope interférométrique.

## Description

La présente invention se rapporte aux instruments de mesure de forces locales de surface utilisant des moyens optiques et concerne, plus particulièrement, un détecteur interférométrique de résolution atomique, ses utilisations et des procédés de mise en oeuvre. Par mesure de forces locales d'une surface il faut comprendre l'analyse de surfaces, par exemple la mesure de rugosité ou d'irrégularités, mais également l'analyse de vibrations, la détection d'ondes acoustiques ou encore la mesure de pressions.

L'article de D. Rugar et al., "Atomic Porce Microscopy", Physics Today, October 1990, pp. 23 à 30, porte sur les microscopes à balayage en général. L'un de ces microscopes à balayage décrit est le microscope à effet tunnel de G. Binnig et al. D'autres microscopes décrits sont les microscopes de forces atomiques lesquelles permettent la mesure de forces locales d'une surface. Ces microscopes font appel actuellement aux techniques de détection optique, plus particulièrement à la détection interférométrique.

La publication de D. Rugar et al., "Improved Fiber Optic Interferometer for Atomic Force Microscopy", Applied Physics Letters, 55, 2588 (1989), décrit un microscope de forces faisant appel à une détection interférométrique. Le produit d'interférence est obtenu par la superposition de deux rayons optiques (interférence à deux ondes optiques). Une première réflexion de l'onde optique a lieu en bout d'une fibre optique d'amenée à l'interface coeur de la fibre optique-air. Une seconde réflexion a lieu sur un levier et est partiellement réintroduite dans la fibre optique d'amenée. L'élément essentiel du microscope de forces à détection interférométrique de l'art antérieur est un détecteur interférométrique de résolution atomique conforme au préambule de la revendication 1 ou de la revendication 2. Le détecteur interférométrique de résolution atomique de l'art antérieur est un système à interférométrie à deux ondes optiques.

La limitation principale de ces systèmes interférométriques est leur faible sensibilité ou résolution.

Aussi un but de la présente invention est-il un détecteur interférométrique de résolution atomique susceptible d'être utilisé, par exemple, dans un microscope de forces à détection interférométrique de sensibilité et de résolution beaucoup plus importantes que celles des détecteurs interférométriques de résolution atomique de l'art antérieur.

Un autre but de l'invention est un détecteur interférométrique de résolution atomique dont la sensibilité peut être maintenue à sa valeur maximale tout au long de la mesure.

Un autre but de l'invention est un détecteur interférométrique de résolution atomique compact, de faible encombrement, de mise en oeuvre facile et dont le signal du produit d'interférence est de visibilité maximale.

Un autre but de l'invention est de trouver de nouvelles applications du détecteur interférométrique de résolution atomique ainsi qu'un nouveau domaine d'application du microscope interférométrique de forces atomiques incorporant un tel détecteur interférométrique de résolution atomique.

D'autres buts de l'invention sont des procédés de mise en oeuvre des instruments de mesure de forces locales de surface incorporant le détecteur interférométrique de résolution atomique de l'invention.

Les caractéristiques de l'invention sont définies dans les revendications.

Un avantage du détecteur interférométrique de résolution atomique de l'invention ainsi que du microscope de forces l'incorporant est leur stabilité mécanique du fait de leur compacité.

Un autre avantage du détecteur interférométrique de résolution atomique tel que défini à la revendication 1 est la mise en oeuvre d'un résonateur interférométrique à ondes multiples.

Un avantage du détecteur interférométrique de résolution atomique tel que défini à la revendication 2, ainsi que de l'utilisation du microscope de forces à détection interférométrique telle que définie à la revendication 5, est de pouvoir être utilisé dans un liquide, par exemple un bain électrolytique.

Un avantage du détecteur interférométrique de résolution atomique tel que défini à la revendication 3 est de pouvoir être incorporé dans un microscope de forces à détection interférométrique permettant la caractérisation de toute surface disposée dans toute atmosphère.

Un avantage des procédés de mise en oeuvre conformes à l'invention est que leur industrialisation est facile du fait de la simplicité du détecteur interférométrique de résolution atomique et du nombre limité d'éléments composant le microscope de forces à détection interférométrique.

D'autres objets, caractéristiques et avantages de la présente invention apparaîtront plus clairement à la lecture de la description suivante, description faite à titre purement illustratif et en relation avec les dessins joints dans lesquels:
La fig. 1 montre un schéma de principe du microscope de forces à détection interférométrique de l'invention.
La fig. 2 est une vue en coupe du détecteur interférométrique de résolution atomique de l'invention.

La présente invention concerne en particulier un détecteur interférométrique de résolution atomique susceptible d'être incorporé dans un microscope de forces à détection interférométrique, dans un dispositif d'analyse de vibrations, dans un système de détection d'ondes acoustiques ou encore dans un capteur de pression.

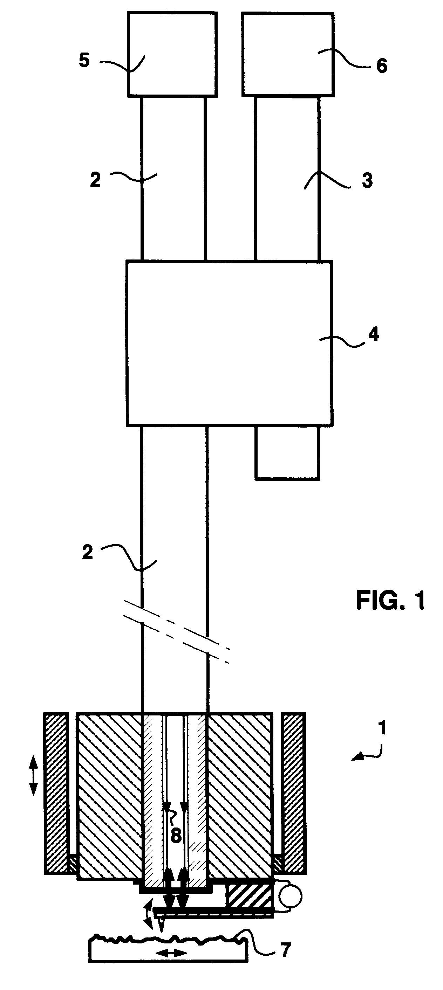

La figure 1 montre un schéma de principe du microscope de forces à détection interférométrique de l'invention. Le microscope de forces comporte, principalement, le détecteur interférométrique de résolution atomique **1**, une fibre optique d'amenée **2**, une fibre optique de retour **3**, un coupleur optique **4**, un moyen optique émetteur **5** et des moyens optoélectroniques de détection **6**.

Le détecteur interférométrique de résolution atomique qui sera décrit plus en détail ci-après, est maintenu mobile ou non face, par exemple, à un matériau dont on veut, par exemple, déterminer la rugosité ou les irrégularités de sa surface **7**. Le détecteur interférométrique' de résolution atomique comporte la fibre optique d'amenée dans laquelle se propage une onde lumineuse **8** émise par le moyen optique émetteur en direction de ce détecteur interférométrique de résolution atomique. Le coupleur optique injecte dans la fibre optique de retour l'onde lumineuse réfléchie par le détecteur interférométrique. Les moyens optoélectroniques de détection sont connectés à l'extrémité de cette fibre optique de retour.

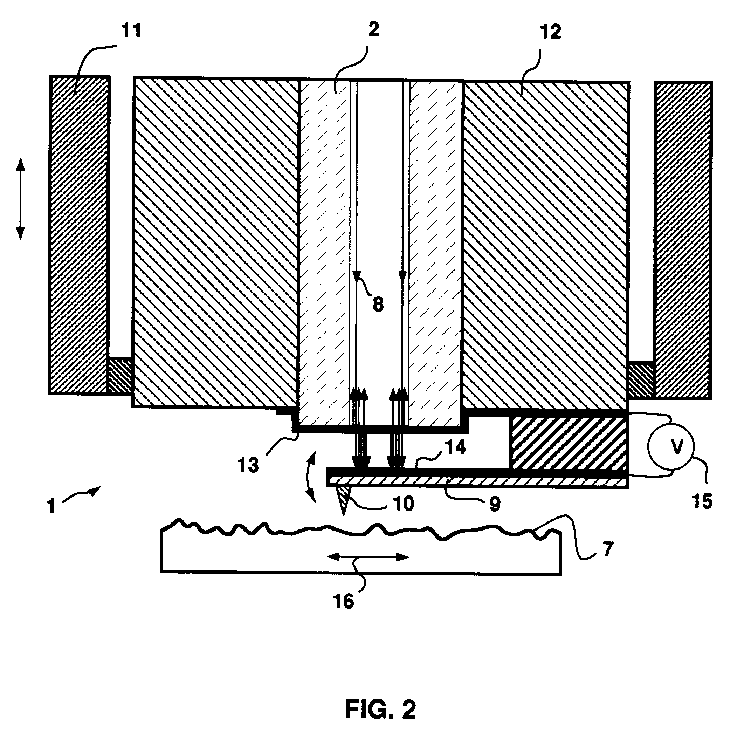

La figure 2 est une vue en coupe du détecteur interférométrique de résolution atomique de l'invention.

Le détecteur interférométrique de résolution atomique **1** comprend un levier **9** comportant, sur une première face, un pointeur **10**. Des moyens **11**, par exemple piézoélectriques, fixés à un support **12**, positionnent le pointeur à une distance de quelques dizaines de nanomètres ou au contact de la surface **7** dont on veut, par exemple, déterminer la rugosité ou les irrégularités. La fibre optique d'amenée est maintenue dans ce support **12**. Une première extrémité de cette fibre optique d'amenée est disposée face à la seconde face du levier. Une réflexion partielle de l'onde lumineuse **8** se propageant dans la fibre optique se produit sur la première extrémité de cette fibre optique. Une réflexion totale de l'onde lumineuse se produit sur la seconde face du levier.

Des moyens appropriés (non représentés mais symbolisés, à titre d'exemple, par la flèche **16**) sont utilisés pour explorer la surface à l'aide du pointeur.

Conformément à l'invention, la distance ΔS entre la première extrémité de la fibre optique d'amenée et la seconde face du levier, celui-ci étant dans une position stable, est telle que l'intensité lumineuse de la réflexion totale de l'onde lumineuse sur la seconde face du levier soit au moins égale à l'intensité lumineuse de la réflexion partielle de l'onde lumineuse se propageant dans la fibre optique. De cette manière, la visibilité du produit d'interférence entre les réflexions partielle et totale est maximale.

Toujours selon l'invention, la première extrémité de la fibre optique d'amenée et la seconde face du levier comportent des moyens **13**, **14**, respectivement semi-réfléchissants et réfléchissants, de manière à constituer un interféromètre du type Fabry-Perot. Ces moyens semi-réfléchissants ou réfléchissants sont, par exemple, une couche métallique.

Le produit d'interférence issu de l'interférence entre les réflexions partielle et totale est détecté par les moyens optoélectroniques de détection disposés à l'extrémité de la fibre optique de retour. Selon une caractéristique essentielle de l'invention, l'interférence est une interférence à ondes multiples.

Toujours selon l'invention, les couches métalliques sont soumises à une différence de potentiel ΔV **15** de manière à fixer le point de fonctionnement P de l'interféromètre du type Fabry-Perot pour lequel la sensibilité est maximale, par l'application d'une force électrostatique au levier.

Il ressort de ce qui précède que le point de fonctionnement P de l'interféromètre du type Fabry-Perot est défini par la distance ΔS entre la première extrémité de la fibre optique et la seconde face du levier. La fibre optique d'amenée est disposée dans le support de manière que la distance ΔS soit telle que la sensibilité de l'interféromètre du type Fabry-Perot soit maximale. Le point de fonctionnement P peut alors être réglé précisément en positionnant le levier grâce à l'application d'une différence de tension ΔV appropriée entre les couches métalliques.

Le levier est soumis à un mouvement de flexion, soit par l'intermédiaire du pointeur si ce dernier est en contact avec la surface dont on veut déterminer, par exemple, la rugosité ou les irrégularités, soit sous l'effet de forces, notamment la force d'attraction connue sous le nom de "force de van der Waals", si le pointeur est disposé proche de la surface. Ce mouvement de flexion a pour conséquence de modifier la distance ΔS et donc la position du point de fonctionnement de l'interféromètre du type Fabry-Perot. Dans le but de garder cette position et donc la sensibilité de l'interféromètre à une valeur constante, plusieurs solutions sont possibles. Une première solution consiste à appliquer une différence de tension ΔV appropriée entre les couches métalliques et ainsi appliquer une force électrostatique au levier de manière à ramener celui-ci dans sa position initiale. Une seconde solution consiste à ramener le levier dans sa position initiale en appliquant une tension appropriée aux moyens piézoélectriques de manière à déplacer le détecteur interférométrique de résolution atomique. Il va de soi que ces deux solutions peuvent être combinées entre elles.

L'invention porte également sur l'utilisation du détecteur interférométrique de résolution atomique dans un microscope de forces à détection interférométrique, un dispositif d'analyse de vibrations, un système de détection d'ondes acoustiques ou un capteur de pression. En d'autres termes, l'invention porte également sur l'utilisation du détecteur interférométrique de résolution atomique dans tout instrument de mesure de forces locales de surface.

L'invention porte également sur l'utilisation du microscope interférométrique de forces atomiques selon l'invention pour la détermination de la rugosité ou des irrégularités d'une surface disposée dans un liquide, par exemple un bain électrolytique. Une telle application est rendue possible du fait que, comme décrit précédemment, l'extrémité de la fibre optique d'amenée disposée dans le détecteur interférométrique de résolution atomique, lui-même disposé dans le bain électrolytique, comporte une couche métallique. Cette couche métallique a pour effet d'augmenter la résistance mécanique de l'extrémité de la fibre disposée dans le bain électrolytique et de permettre de satisfaire les conditions de réflexion aux interfaces coeur de la fibre-couche métallique et couche métallique-bain électrolytique.

Dans une telle application, une couche de protection (non représentée) est déposée sur la couche métallique réfléchissante dans le but d'éviter l'enlèvement de matière par voie électrolytique.

L'invention porte également sur l'utilisation de tout dispositif d'analyse de vibrations, de tout système de détection d'ondes acoustiques ou encore de tout capteur de pression incorporant le détecteur interférométrique de résolution atomique de l'invention pour la mesure des forces locales d'une surface disposée dans un liquide quelconque. L'utilisation de ces dispositifs peut également concerner une surface soumise à un vide intense ou encore à une surface disposée dans un environnement d'accès difficile. Ces utilisations sont rendues possibles du fait que le détecteur interférométrique est réglé avant son positionnement sur ou au voisinage de la surface.

L'invention porte également sur différentes méthodes de mesure de forces locales d'une surface faisant appel pour cela à différents procédés de mise en oeuvre du microscope interférométrique de forces atomiques.

Il va de soi que ces procédés de mise en oeuvre s'appliquent également aux dispositifs d'analyse de vibrations, aux systèmes de détection d'ondes acoustiques ou encore aux capteurs de pression pour la mesure de forces locales de surface.

Un premier exemple de procédé de mise en oeuvre, par exemple, du microscope de forces à détection interférométrique conforme à l'invention consiste à:
- positionner le pointeur à une distance de l'ordre d'une dizaine de nanomètres ou au contact de la surface dont on veut déterminer, par exemple, la rugosité ou les irrégularités;
- explorer la surface à l'aide du pointeur de manière à soumettre le levier à un mouvement de flexion et à faire varier la distance ΔS entre la première extrémité de la fibre optique et la seconde face du levier en fonction de la rugosité ou des irrégularités de la surface; et
- déterminer, par exemple, la rugosité ou les irrégularités de la surface par détection du produit d'interférence entre les réflexions partielle et totales.

Un autre exemple de procédé de mise en oeuvre du microscope de forces à détection interférométrique consiste à:
- positionner le pointeur à une distance de l'ordre d'une dizaine de nanomètres ou au contact de la surface dont on veut déterminer, par exemple, la rugosité ou les irrégularités;
- explorer la surface à l'aide du pointeur de manière à soumettre le levier à un mouvement de flexion et à faire varier la distance ΔS entre la première extrémité de la fibre optique et la seconde face du levier en fonction de la rugosité ou des irrégularités de la surface;
- appliquer une force électrostatique au levier en appliquant une différence de potentiel ΔV aux couches métalliques de manière que le point de fonctionnement P de l'interféromètre du type Fabry-Perot corresponde à la sensibilité maximale de l'interféromètre; et
- déterminer, par exemple, la rugosité ou les irrégularités de la surface par détection de la différence de potentiel ΔV appliquées aux couches métalliques.

Un autre exemple de procédé de mise en oeuvre du microscope de forces à détection interférométrique consiste à:
- positionner le pointeur à une distance de l'ordre d'une dizaine de nanomètres ou au contact de la surface dont on veut déterminer, par exemple, la rugosité ou les irrégularités;
- explorer la surface à l'aide du pointeur de manière à soumettre le levier à un mouvement de flexion et à faire varier la distance ΔS entre la première extrémité de la fibre optique et la seconde face du levier en fonction de la rugosité ou des irrégularités de la surface;
- positionner le pointeur à l'aide des moyens piézoélectriques de manière que le point de fonctionnement P de l'interféromètre du type Fabry-Perot corresponde à la sensibilité maximale de l'interféromètre; et
- déterminer, par exemple, la rugosité ou les irrégularités de la surface par la mesure de la tension de commande appliquée aux moyens piézoélectriques.

Un autre exemple de procédé de mise en oeuvre du microscope de forces à détection interférométrique consiste à:
- positionner le pointeur à une distance de l'ordre d'une dizaine de nanomètres de la surface dont on veut déterminer, par exemple, la rugosité ou les irrégularités;
- appliquer, aux couches métalliques, une différence de potentiel ΔV alternative de fréquence de l'ordre de la fréquence de résonance du levier de manière que la variation de la fréquence de résonance soit fonction de la rugosité ou des irrégularités de la surface; et
- déterminer, par exemple, la rugosité ou les irrégularités de la surface par la mesure de la variation de la fréquence de résonance, de l'amplitude ou de la phase du signal résonant.

Un autre exemple de procédé de mise en oeuvre du microscope de forces à détection interférométrique consiste à:
- positionner le pointeur à une distance de l'ordre d'une dizaine de nanomètres de la surface dont on veut déterminer, par exemple, la rugosité ou les irrégularités;
- appliquer, aux couches métalliques, une différence de potentiel ΔV alternative de fréquence de l'ordre de la fréquence de résonance du levier de manière que la variation de la fréquence de résonance soit fonction de la rugosité ou des irrégularités de la surface;
- positionner le pointeur à l'aide des moyens piézoélectriques de manière que le point de fonctionnement P de l'interféromètre du type Fabry-Perot corresponde à la sensibilité maximale de l'interféromètre; et
- déterminer, par exemple, la rugosité ou les irrégularités de la surface par la mesure de la tension de commande appliquée aux moyens piézoélectriques.

Un autre exemple de procédé de mise en oeuvre du microscope de forces à détection interférométrique consiste à:
- positionner le pointeur à une distance de l'ordre d'une dizaine de nanomètres de la surface dont on veut déterminer, par exemple, la rugosité ou les irrégularités;
- appliquer, sur la seconde face du levier, une onde lumineuse d'intensité lumineuse élevée de manière que le levier résonne à sa fréquence de résonance et que la variation de la fréquence de résonance soit fonction de la rugosité ou des irrégularités de la surface; et
- déterminer, par exemple, la rugosité ou les irrégularités de la surface par la mesure de la variation de la fréquence de résonance, de l'amplitude ou de la phase du signal résonant.

Un autre exemple de procédé de mise en oeuvre du microscope de forces à détection interférométrique consiste à:
- positionner le pointeur à une distance de l'ordre d'une dizaine de nanomètres de la surface dont on veut déterminer, par exemple, la rugosité ou les irrégularités;
- appliquer, sur la seconde face du levier, une onde lumineuse d'intensité lumineuse élevée de manière que le levier résonne à sa fréquence de résonance et que la variation de la fréquence de résonance soit fonction de la rugosité ou des irrégularités de la surface;
- positionner le pointeur à l'aide des moyens piézoélectriques de manière que le point de fonctionnement P de l'interféromètre du type Fabry-Perot corresponde à la sensibilité maximale de l'interféromètre; et
- déterminer, par exemple, la rugosité ou les irrégularités de la surface par la mesure de la tension de commande appliquée aux moyens piézoélectriques.

Comme indiqué précédemment, l'analyse de la surface, par exemple la détermination de sa rugosité ou de ses irrégularités dans le cas de la mise en oeuvre du microscope de forces, par la mesure de la variation de la fréquence de résonance peut également être obtenue par la mesure de la variation de l'amplitude ou encore de la phase du signal résonant.

## Revendications

1. Détecteur interférométrique de résolution atomique (1) comprenant:
- un levier (9) comportant un pointeur (10) sur sa première face;
- des moyens (11) pour positionner ledit pointeur à une distance de l'ordre d'une dizaine de nanomètres ou au contact d'une surface (7) dont on veut mesurer les forces locales;
- une fibre optique d'amenée (2), maintenue dans un support (12), dont une première extrémité est disposée face à la seconde face dudit levier et dans laquelle se produit une réflexion partielle, sur ladite première extrémité de la fibre optique, de l'onde lumineuse (8) se propageant dans ladite fibre optique d'amenée, une réflexion totale de l'onde lumineuse se produisant sur la seconde face dudit levier et
- des moyens optoélectroniques (6) de détection du produit d'interférence entre lesdites réflexions partielle et totale;
**caractérisé en ce que** ladite première extrémité de la fibre optique (2) et ladite seconde face dudit levier (9) comportent des moyens (13, 14), respectivement semi-réfléchissants et réfléchissants, de manière à constituer un interféromètre du type Fabry-Perot.

2. Détecteur interférométrique selon la revendication 1, dans lequel les moyens (13, 14), respectivement,semi-réfléchissants et réfléchissants, sont des moyens conducteurs de l'électricité susceptibles d'être soumis à une différence de potentiel ΔV (15) de manière à fixer le point de fonctionnement P dudit interféromètre du type Fabry-Perot pour lequel la sensibilité est maximale, par l'application d'une force électrostatique audit levier.

3. Détecteur interférométrique de résolution atomique (1) comprenant:
- un levier (9) comportant un pointeur (10) sur sa première face;
- des moyens (11) pour positionner ledit pointeur à une distance de l'ordre d'une dizaine de nanomètres ou au contact d'une surface (7) dont on veut mesurer les forces locales;
- une fibre optique d'amenée (2), maintenue dans un support (12), dont une première extrémité est disposée face à la seconde face dudit levier et dans laquelle se produit une réflexion partielle, sur ladite première extrémité de la fibre optique, de l'onde lumineuse se propageant dans ladite fibre optique, une réflexion totale de l'onde lumineuse se produisant sur la seconde face dudit levier de manière à obtenir un produit d'interférence entre lesdites réflexions partielle et totale;
**caractérisé en ce que:**
- la distance ΔS entre ladite première extrémité de ladite fibre optique (2) et ladite seconde face dudit levier (9), celui-ci étant dans une position stable, est telle que l'intensité lumineuse de ladite réflexion totale de l'onde lumineuse sur la seconde face dudit levier soit au moins égale à l'intensité lumineuse de ladite réflexion partielle de l'onde lumineuse se propageant dans ladite fibre optique de manière que la visibilité dudit produit d'interférence entre lesdites réflexions partielle et totale soit maximale;
- ladite première extrémité de la fibre optique (2) et ladite seconde face dudit levier (9) comportent une couche métallique (13, 14), respectivement semi-réfléchissante et réfléchissante, de manière à constituer un interféromètre du type Fabry-Perot; et
- lesdites couches métalliques (13, 14) sont soumises à une différence de potentiel ΔV (15) de manière à fixer le point de fonctionnement P dudit interféromètre du type Fabry-Perot pour lequel la sensibilité est maximale, par l'application d'une force électrostatique audit levier.

4. Utilisation du détecteur interférométrique de résolution atomique défini à l'une quelconque des revendications 1 à 3 dans tout instrument de mesure de forces locales de surface.

5. Utilisation de l'instrument de mesure de forces locales de surface incorporant le détecteur interférométrique de résolution atomique défini à l'une quelconque des revendications 1 à 3, dans laquelle la surface (7) est disposée dans un liquide ou soumise à un vide intense ou disposée dans un environnement d'accès difficile.

6. Procédé de mise en oeuvre d'un instrument de mesure de forces locales de surface incorporant le détecteur interférométrique de résolution atomique défini à l'une quelconque des revendications 1 à 3; **caractérisé en ce qu'**il comporte les étapes suivantes:
- positionnement dudit pointeur à une distance de l'ordre d'une dizaine de nanomètres ou au contact de la surface;
- exploration de ladite surface à l'aide dudit pointeur de manière à soumettre ledit levier à un mouvement de flexion et à faire varier la distance ΔS entre ladite première extrémité de ladite fibre optique et ladite seconde face dudit levier; et
- détermination des forces locales de ladite surface par détection dudit produit d'interférence entre lesdites réflexions partielle et totales.

7. Procédé de mise en oeuvre d'un instrument de mesure de forces locales de surface incorporant le détecteur interférométrique de résolution atomique défini à l'une quelconque des revendications 1 à 3; **caractérisé en ce qu**'il comporte les étapes suivantes:
- positionnement dudit pointeur à une distance de l'ordre d'une dizaine de nanomètres ou au contact de la surface;
- exploration de ladite surface à l'aide dudit pointeur de manière à soumettre ledit levier à un mouvement de flexion et à faire varier la distance ΔS entre ladite première extrémité de ladite fibre optique et ladite seconde face dudit levier;
- application d'une force électrostatique audit levier en appliquant une différence de potentiel ΔV auxdites couches métalliques de manière que le point de fonctionnement P dudit interféromètre du type Fabry-Perot corresponde à la sensibilité maximale dudit interféromètre; et
- détermination des forces locales de ladite surface par la mesure de ladite différence de potentiel ΔV appliquées auxdites couches métalliques.

8. Procédé de mise en oeuvre d'un instrument de mesure de forces locales de surface incorporant le détecteur interférométrique de résolution atomique défini à l'une quelconque des revendications 1 à 3; **caractérisé en ce qu**'il comporte les étapes suivantes:
- positionnement dudit pointeur à une distance de l'ordre d'une dizaine de nanomètres ou au contact de la surface;
- exploration de ladite surface à l'aide dudit pointeur de manière à soumettre ledit levier à un mouvement de flexion et à faire varier la distance ΔS entre ladite première extrémité de ladite fibre optique et ladite seconde face dudit levier;
- positionnement dudit pointeur à l'aide des moyens piézoélectriques de manière que le point de fonctionnement P dudit interféromètre du type Fabry-Perot corresponde à la sensibilité maximale dudit interféromètre; et
- détermination des forces locales de ladite surface par la mesure de la tension de commande appliquée auxdits moyens piézoélectriques.

9. Procédé de mise en oeuvre d'un instrument de mesure de forces locales de surface incorporant le détecteur interférométrique de résolution atomique défini à l'une quelconque des revendications 1 à 3; **caractérisé en ce qu**'il comporte les étapes suivantes:
- positionnement dudit pointeur à une distance de l'ordre d'une dizaine de nanomètres de la surface;
- application, auxdites couches métalliques, d'une différence de potentiel ΔV alternative de fréquence de l'ordre de la fréquence de résonance dudit levier; et
- détermination des forces locales de ladite surface par la mesure de la variation de ladite fréquence de résonance, de l'amplitude ou de la phase du signal résonant.

10. Procédé de mise en oeuvre d'un instrument de mesure de forces locales de surface incorporant le détecteur interférométrique de résolution atomique défini à l'une quelconque des revendications 1 à 3; **caractérisé en ce qu'**il comporte les étapes suivantes:
- positionnement dudit pointeur à une distance de l'ordre d'une dizaine de nanomètres de la surface;
- application, auxdites couches métalliques, d'une différence de potentiel ΔV alternative de fréquence de l'ordre de la fréquence de résonance dudit levier;
- positionnement dudit pointeur à l'aide des moyens piézoélectriques de manière que le point de fonctionnement P dudit interféromètre du type Fabry-Perot corresponde à la sensibilité maximale dudit interféromètre; et
- détermination des forces locales de ladite surface par la mesure de la tension de commande appliquée auxdits moyens piézoélectriques.

11. Procédé de mise en oeuvre d'un instrument de mesure de forces locales de surface incorporant le détecteur interférométrique de résolution atomique défini à l'une quelconque des revendications 1 à 3; **caractérisé en ce qu**'il comporte les étapes suivantes:
- positionnement dudit pointeur à une distance de l'ordre d'une dizaine de nanomètres de la surface;
- application, sur ladite seconde face du levier, d'une onde lumineuse d'intensité lumineuse élevée de manière que ledit levier résonne à sa fréquence de résonance; et
- détermination des forces locales de ladite surface par la mesure de la variation de ladite fréquence de résonance, de l'amplitude ou de la phase du signal résonant.

12. Procédé de mise en oeuvre d'un instrument de mesure de forces locales de surface incorporant le détecteur interférométrique de résolution atomique défini à l'une quelconque des revendications 1 à 3; **caractérisé en ce qu'**il comporte les étapes suivantes:
- positionnement dudit pointeur à une distance de l'ordre d'une dizaine de nanomètres de la surface;
- application, sur ladite seconde face du levier, d'une onde lumineuse d'intensité lumineuse élevée de manière que ledit levier résonne à sa fréquence de résonance;
- positionnement dudit pointeur à l'aide des moyens piézoélectriques de manière que le point de fonctionnement P dudit interféromètre du type Fabry-Perot corresponde à la sensibilité maximale dudit interféromètre; et
- détermination des forces locales de ladite surface par la mesure de la tension de commande appliquée auxdits moyens piézoélectriques.
